# EUROPÄISCHE PATENTSCHRIFT

(11) **EP 2 353 407 B1**
(45) Veröffentlichungstag und Bekanntmachung des Hinweises auf die Patenterteilung: **22.08.2012**
(21) Anmeldenummer: 11000511.3
(22) Anmeldetag: 22.01.2011
(51) Int. Cl.: A23N 5/00, B26D 3/08

(54) **Einrichtung zum Schlitzen oder Schneiden von Früchten mit harter Schale, insbesondere Eßkastanien oder Maronen, und Verfahren hierzu**
Device and method for cutting or slitting fruits with hard peels, in particular horse chestnuts or sweet chestnuts
Dispositif d'entaillage ou de coupe de fruits ayant une coque dure, notamment des châtaignes ou des marrons, et procédé associé

(30) Priorität: 27.01.2010 DE 102010001277
(43) Veröffentlichungstag der Anmeldung: 10.08.2011
(73) Patentinhaber: Yildirim, Ergen, 69117 Heidelberg (DE)
(72) Erfinder: Yildirim, Ergen, 69117 Heidelberg (DE)
(74) Vertreter: Weber, Walter

(56) Entgegenhaltungen:
- CH-A- 187 063
- CH-A- 501 371
- DE-C1- 4 419 737
- FR-A- 916 902
- GB-A- 243 650
- GB-A- 2 100 968

## Beschreibung

Die Erfindung betrifft eine Einrichtung zum Schlitzen oder Schneiden der Schale von hartschaligen Früchten, beispielsweise Eßkastanien oder Maronen, aber auch zum Knacken von Nüssen oder Pistazienkernen, sowie ein Verfahren dazu. Maronischlitzmaschinen dienen dazu, große Mengen von Maroni unabhängig vom Ort der Verwendung und in zeitlichem Abstand zum Zeitpunkt der Verwendung für die Verwendung vorzubereiten.

Aus der GB 243,650 ist eine Vorrichtung zum Aufbrechen von Nüssen bekannt, die auch eine Schälvorrichtung umfaßt. Diese Schälvorrichtung erlaubt die Bearbeitung von Nüssen unterschiedlicher Größe und Form. Die Schälvorrichtung dient dazu, vorhandene Schalen von Nüssen vor dem eigentlichen Aufbrechvorgang vollständig zu entfernen und ist wegen der abtragenden Arbeitsweise nur für die Entfernung weicher Schalen geeignet.

Aus der GB 2 100 968 A ist eine Vorrichtung zum Aufbrechen von hartschaligen Nüssen bekannt, wobei das Aufbrechen nach Einbringen einer Nuß in eine Höhlung zwischen paarweise angeordneten Blöcken erfolgt, indem jeweils ein Messer durch die Blöcke auf die Nuß geführt wird, so daß die Nußschale gleichzeitig durch beide gegenläufig einwirkende Messer in zwei Hälften geteilt wird. Dies hat den Nachteil, daß die Schalen vollständig aufgebrochen werden und die Frucht der Luft und sonstigen Einflüssen ausgesetzt ist. Wegen der drohenden Austrocknung oder des Verderbens ist eine umgehende Verwendung erforderlich, was einer zeitlich verzögerte Verwendung entgegensteht. Auch die Verwendung an einem andere Ort würde in diesem Fall Verpackungsaufwand erfordern.

Aus der CH 187 063 ist eine Maroni-Kerbmaschine bekannt, bei der einzelne Früchte mit Hilfe federnd angebrachter einzelner Messer eingeschnitten werden.

Aus der DE 40 34 503 A1 ist eine Vorrichtung bekannt, bei der Eßkastanien oder Maronen mit einem Niederhalter in ihrer Lage festgehalten und an einer Schneidevorrichtung vorbeigezogen werden. Die Schneidevorrichtung kann als fest angeordnetes oder rotierendes Messer ausgebildet sein, wobei ein Distanzhalter neben dem Messer ein zu tiefes Einschneiden verhindert. Darüber hinaus kann ein Schneidelaser vorgesehen sein.

Bei der Ausführung mit Messern ist nachteilig, daß der Schlitz in der Eßkastanie wegen der Wölbung der Eßkastanie entweder kurz ausgeführt ist, wenn die Eindringtiefe gering ist, und daß eine Verlängerung des Schlitzes die Eindringtiefe über das gewünschte Maß hinaus vergrößert. Ein Schneidelaser hat den Nachteil, daß besondere Schutzvorkehrungen getroffen werden müssen und Aufwand und Energieeinsatz beträchtlich sind.

Eine zu große Eindringtiefe hat den Nachteil, daß sich das Fruchtfleisch der Eßkastanie im Bereich des Schnittes mit der Zeit verfärbt, so daß eine längere Lagerung nicht möglich ist.

Aus der WO 02/074108 A1 ist eine Schäl- und Schlitzvorrichtung für Eßkastanien oder Maronen bekannt, bei der ebenfalls ein rotierendes Messer zum Einsatz gelangt, wobei die Eßkastanie durch eine federnd gelagerte Platte während des Schneidvorgangs gehalten wird. Zwar ist hier das Problem der Fixierung der Eßkastanie während des Schneidens unter Berücksichtigung der individuellen Größe gelöst, das grundsätzliche Problem der Schlitzlänge und Schlitztiefe bleibt jedoch bestehen.

Die Aufgabe der Erfindung besteht darin, eine Vorrichtung und ein Verfahren bereitzustellen, mit dem Früchte mit harter Schale, insbesondere Eßkastanien oder Maronen, mit einem Schnitt oder einem Schlitz versehen oder geknackt werden können, wobei selbst bei gewünschter geringer Eindringtiefe noch eine ausreichende Schnittlänge bzw. Schlitzlänge bzw. Bruchkante erzeugt werden kann.

Eine erfindungsgemäße Vorrichtung zum Schlitzen oder Schneiden von Früchten mit harter Schale, insbesondere Eßkastanien oder Maronen, weist einen Schneidtisch zum Auflegen der Frucht und eine in einem Abstand zum Schneidtisch angeordnete, zum Schneidtisch hin entlang einer Führung verstellbare Schneideinrichtung auf, die mehrere, in Schnittrichtung hintereinander angeordnete Messersegmente umfaßt, wobei jedes der Messersegmente gegenüber dem benachbarten Messersegment in einem Messerhalter in Richtung zum Schneidtisch hin verstellbar geführt ist, und daß eine Bremseinrichtung vorgesehen ist, mit der jedes Messersegment einzeln oder alle Messersegmente zusammen gegenüber dem Messerhalter in lösbarer Weise fixierbar sind.

Die einzelnen Messersegmente ermöglichen es, die Schnittlinie der Schneideinrichtung an die Kontur jeder einzelnen Frucht bzw. der mehrerer Früchte vor dem eigentlichen Schneiden anzupassen, um dann den Schnitt entlang dieser Kontur auszuführen. Dabei kann die Schnittiefe so eingestellt sein, daß die Frucht nur in einem vorgegebenen Randbereich geschnitten wird, wobei der Schnitt an sich nicht vollständig sein muß, sondern auch eine Perforation möglich ist. Anstelle einer Schnittlinie kann bei Schalen von Nüssen eine Bruchlinie erzeugt werden, die zu einem Aufbrechen der Nußschale führt. In diesem Fall soll das Fruchtfleisch der Nuß entnommen werden können.

Eine vorteilhafte Weiterbildung sieht vor, daß die Messersegmente so angeordnet und ausgestaltet sind und so mit der Bremsvorrichtung zusammenwirken, daß beim Schneidvorgang anstelle eines klaffenden Schnitts eine Perforationslinie in Form von einzelnen punktuellen Öffnungen in der Schale erzeugbar ist. Dadurch wird die Schutzfunktion der Schale gegenüber der Frucht weniger beeinträchtigt. Die so bearbeitete Frucht kann deutlich länger gelagert werden, ohne auszutrocknen, nämlich etwa zwölf Tage anstelle von nur ein bis zwei Tagen.

Vorteilhafterweise kann das Messersegment eine Spitze mit einer Schnittkante aufweisen, die in Schnittrichtung gesehen eine Schrägstellung von ±0,5 bis ±30 Grad aufweist.

Dank dieser Schrägstellung wird der Schneidvorgang begünstigt, da eine punktuelle Auflage der Schneidkante das Eindringen des Messers erleichtert und gleichzeitig die bereitzustellende Schneidkraft verringert wird.

Gemäß einer vorteilhaften Weiterbildung kann die Bremseinrichtung zusätzlich zu der Fixierstellung, in der die Bremskraft so eingestellt ist, daß das Messersegment beim Schneiden festgehalten wird, eine Bremsstellung aufweisen, in der ein Verschieben des Messersegments gegen eine Bremskraft ermöglicht ist.

Die Vorsehung einer Bremsstellung mit Verschiebemöglichkeit des Messersegments ermöglicht das Anlegen des Messersegments an die Schale der zu schneidenden Frucht und die Aufbringung einer durch die Bremskraft vorgegebenen Andruckkraft des Messersegments vor dem eigentlichen Schneidvorgang, der erst dann einsetzt, wenn das Messersegment festgehalten wird.

Vorteilhafterweise kann der Schneidtisch so breit sein, daß mehrere Früchte gleichzeitig nebeneinander auf dem Schneidtisch angeordnet werden können. Mit einem einzigen Schneidvorgang können dann mehrere Früchte gleichzeitig geschnitten oder geschlitzt werden.

Gemäß einer vorteilhaften Weiterbildung können der Schneidtisch und das Messer an einer Fördereinrichtung mit in Förderrichtung hintereinanderliegenden Förderkammern für die Früchte angeordnet sein, wobei der Schneidtisch und das Messer vorzugsweise quer zur Förderrichtung angeordnet sein können.

Die Anordnung der Schneideinrichtung an einer Fördereinrichtung ermöglicht eine Zufuhr der Früchte zur Schneideinrichtung. Durch die mögliche Anordnung der Schneideinrichtung quer zur Förderrichtung können die mehreren Früchte entlang einer einzigen Schnittkante geschnitten werden und eine zusätzliche Ausrichtung der Frucht zur Schneideinrichtung ist nicht erforderlich.

Vorteilhafterweise kann die Fördereinrichtung einen Sammelbehälter für die Früchte aufweisen, an dem ein Förderband mit in Förderrichtung hintereinanderliegenden Förderkammern angeordnet ist. Die Förderkammern können sich in Förderrichtung mindestens über die 1,5-fache durchschnittliche Länge (a) der Früchte erstrecken, vorzugsweise über die 2-fache Länge, und in der Richtung quer zur Förderrichtung über mindestens die x-fache durchschnittliche Länge (a) der Früchte erstrecken, wobei x mindestens 2 ist, so daß mindestens eine Frucht aus dem Sammelbehälter heraus in eine der Förderkammern gelangen kann.

Vorzugsweise können weiterhin zwischen den Förderkammern und dem Sammelbehälter zueinander beabstandete Leisten vorgesehen sein, deren Breite quer zur Förderrichtung mindestens die y-fache durchschnittliche Länge (a) der Früchte beträgt, wobei y mindestens 1, vorzugsweise im Bereich von 2 ist. Dadurch kann in Richtung quer zur Transportrichtung oberhalb der Leisten ein Freiraum zur Verfügung gestellt werden, der für die Ausrichtung der Früchte in der Förderkammer oberhalb der Leisten verwendet werden kann.

Vorteilhafterweise kann nach dem Schneidtisch eine Auswurfförderstrecke vorgesehen sein, wobei die Auswurfförderstrecke eine Auswurföffnung für nicht geschnittene Früchte umfaßt.

Vorteilhafterweise kann sich der Schneidtisch in Förderrichtung über die 0,6-fache bis 1-fache durchschnittliche Länge (a) der Früchte erstrecken, und die sich an den Schneidtisch unmittelbar anschließende Auswurföffnung für nicht geschnittene Früchte kann sich in Förderrichtung über die 1-fache bis 1,5-fache durchschnittliche Länge (a) der Früchte erstrecken und verschließbar sein. Dies kann mit einer Klappe geschehen.

Die Vorsehung einer Auswurföffnung für nicht geschnittene Früchte, die in der Förderkammer in doppelter Reihe liegen, trägt dem Erfordernis des Ausrichtens der Früchte in der Förderkammer während der Förderung Rechnung und verhindert trotzdem, daß sich ungeschnittene Früchte mit geschnittenen Früchten vermischen.

Grundsätzlich besteht ein Interesse daran, den Anteil der geförderten Früchte, die nicht geschnitten werden, so gering wie möglich zu halten, um den mit einer unnötigen Förderung verbundenen Aufwand gering zu halten.

Vorteilhafterweise kann die Auswurfförderstrecke nach der Auswurföffnung für nicht geschnittene Früchte eine Auswurföffnung für geschnittene Früchte umfassen, die sich an die Auswurföffnung für nicht geschnittene Früchte in Förderrichtung anschließt. Die Auswurföffnung für geschnittene Früchte sollte sich mindestens über die 1-fache durchschnittliche Länge (a) der Früchte erstrecken und kann in Förderrichtung aber auch als einfache Gehäusekante ausgebildet sein, über welche die Früchte geführt werden und dabei nach unten wegkippen. Um die Früchte seitlich aus der Maschine auszugeben, kann eine Rutsche vorgesehen sein.

Zur Ausrichtung der Früchte kann es vorteilhaft sein, wenn vor dem Schneidtisch eine Ausrichtförderstrecke vorgesehen ist und wenn die Ausrichtförderstrecke einen in Förderrichtung welligen Bereich mit sich abwechselnden Wellentälern und Wellenbergen aufweist.

Eine Ausrichtung der Oberseite und der Unterseite der Frucht kann insbesondere dadurch begünstigt werden, daß die Länge (1) zwischen den Wellentälern und den Wellenbergen mindestens der 2-fachen durchschnittlichen Länge (a) der Früchte entspricht und daß die Höhe h zwischen Wellenberg und Wellental dem 0,1-fachen bis 0,6-fachen der durchschnittlichen Länge (a) der Früchte entspricht.

Es kann von Vorteil sein, wenn ein Messersegment in Schnittrichtung eine Breite von 0,25 mm bis 1,5 mm aufweist. Bei dieser Breite ist eine Anpassung an die Kontur der Frucht mit ausreichender Genauigkeit möglich, um die gewünschte, voreingestellte Schnittiefe bereitzustellen. Die Schneidkante an der Spitze des Messersegments ist dann Teil einer der Breite entsprechend abgestuften Schnittlinie entlang der Kontur der Früchte.

Am Messerhalter können zusätzlich zu den Messersegmenten zu diesen beabstandete Zusatzmesser vorgesehen sein, die zusätzlich zu dem Schnitt oder Schlitz der Messersegmente bis zum Erreichen einer Stellung E in die Frucht eindringen. Durch diese zusätzlichen Schnitte durch die Schale der Frucht ist auch bei einem unvollständigen Schnitt durch die Messersegmente sichergestellt, daß die Schale mit Öffnungen versehen ist und die Frucht beim Erhitzen nicht unkontrolliert aufplatzt.

Um das Messersegment oder das Zusatzmesser aus der Frucht herauszuziehen, kann zwischen dem Schneidtisch und der Schneideinrichtung ein Abstreifer für die geschnittene oder geschlitzte Frucht vorgesehen sein.

Ein weiterer Gegenstand der Erfindung ist ein Verfahren zum Schlitzen oder Schneiden von Früchten mit harter Schale, insbesondere Eßkastanien oder Maronen, mit einer auf die Früchte zustellbaren Schneidvorrichtung, die gegeneinander verstellbare Messersegmente aufweist. In einem ersten Schritt werden die Messersegmente beim Zustellen der Schneidvorrichtung unter gegenseitigem Verschieben in Zustellrichtung an die Frucht angelegt, so daß sich die Kontur der Frucht nachbildet. In einem nachfolgenden Schritt werden die Messersegmente mittels einer Bremseinrichtung mit hoher Bremskraft in dieser Kontur fixiert und dringen mit weiterem Zustellen der Messersegmente in Zustellrichtung in die Frucht ein.

Die hohe Bremskraft ist so zu wählen, daß die Schale von den anliegenden Messersegmenten durchdrungen werden kann.

Vorteilhafterweise kann vor dem Fixieren ein Bremsen des Messersegments erfolgen, bei dem eine Verschiebung des Messersegments gegen eine mittlere Bremskraft beim Anlegen an der Oberfläche und bei weiterem Zustellen ohne Schneiden, also ohne Durchdringen der Oberfläche, möglich ist.

Dieses Anlegen hat den Vorteil, daß die Frucht zunächst um einen elastischen Anteil zusammengedrückt werden kann, bevor der eigentliche Schnitt erfolgt. Die mittlere Bremskraft muß so gewählt werden, daß das Messersegment die Schale noch nicht durchdringen kann.

Darüber hinaus kann es vorteilhaft sein, wenn ein weiterer Schlitz eingebracht wird, um ein Platzen sicher zu verhindern.

Vorteilhafterweise kann zusätzlich zu den Messersegmenten mindestens ein zu diesen beabstandeter Niederhalter vorgesehen sein, der während der Zustellbewegung der Messersegmente auf der Frucht zur Anlage gebracht wird, bevor die Messersegmente in die Frucht eindringen, um die Frucht vor dem eigentlichen Schnitt zu stabilisieren und ein Verrutschen der Frucht bei der Aufbringung der Kraft zum Schneiden der Schale zu verhindern.

Die erfindungsgemäße Vorrichtung und das erfindungsgemäße Verfahren werden anhand der Zeichnung erläutert. Es zeigen:
- Fig. 1: eine Vorrichtung zum Schlitzen oder Schneiden oder Knacken von Früchten mit harter Schale;
- Fig. 2A: Messersegmente in ihrer Wirkungsweise im Detail;
- Fig. 2B: das Anlegen einzelner Messersegmente an die Früchte;
- Fig. 3: die Vorrichtung in einem Schnitt entlang der Förderrichtung;
- Fig. 4: den Beginn des Schneid- oder Schlitzvorgangs;
- Fig. 5A: das Auflegen des Messersegments;
- Fig. 5B: den eigentlichen Schneid- oder Schlitzvorgang;
- Fig. 6: den Transport der Früchte zum Schneidtisch;
- Fig. 7: eine wellenförmige Förderstrecke im Detail;
- Fig. 8: eine Fördereinrichtung von einem Sammelbehälter ausgehend bis zur Schneideinrichtung sowie die Ausgaben;
- Fig. 9: quer zur Förderrichtung ausgerichtete Förderleisten des Förderbandes;
- Fig. 10: die Austragung der am Rand befindlichen Früchte und

- Fig. 11A und B: die Verwendung von Zusatzmessern vor dem Schnitt oder während des Schneidens oder Schlitzens.

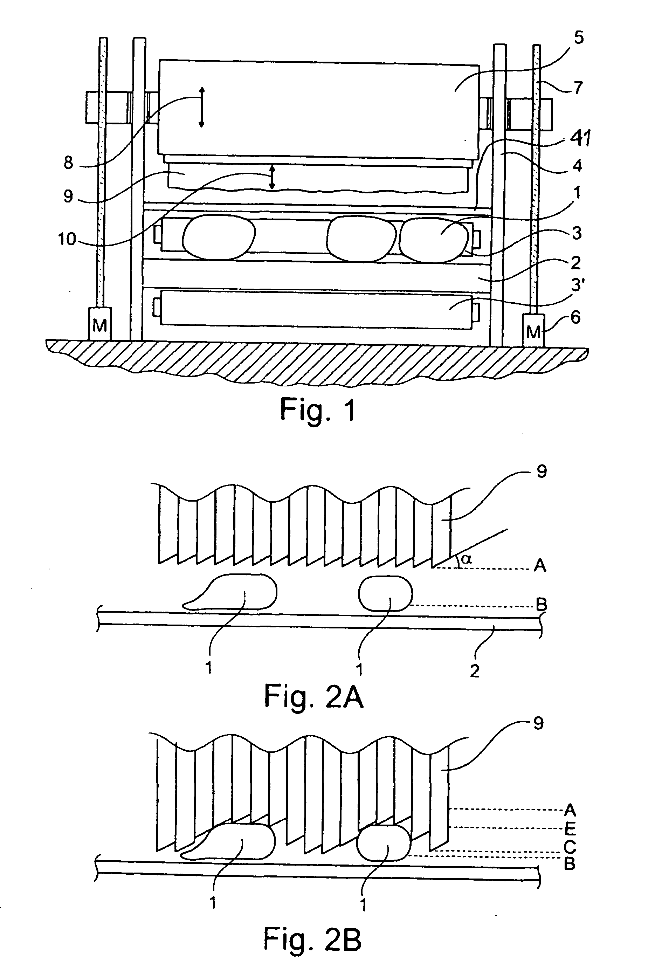

In **Fig. 1** ist eine Vorrichtung zum Schlitzen oder Schneiden von Früchten 1 mit harter Schale, insbesondere von Eßkastanien oder Maronen gezeigt, wobei die Früchte 1, von denen drei dargestellt sind, auf einem Schneidtisch 2 nebeneinanderliegend angeordnet sind und von einer Förderleiste 3 einer Fördereinrichtung aus der Zeichenebene heraus zu dem Schneidtisch 2 herangeführt wurden.

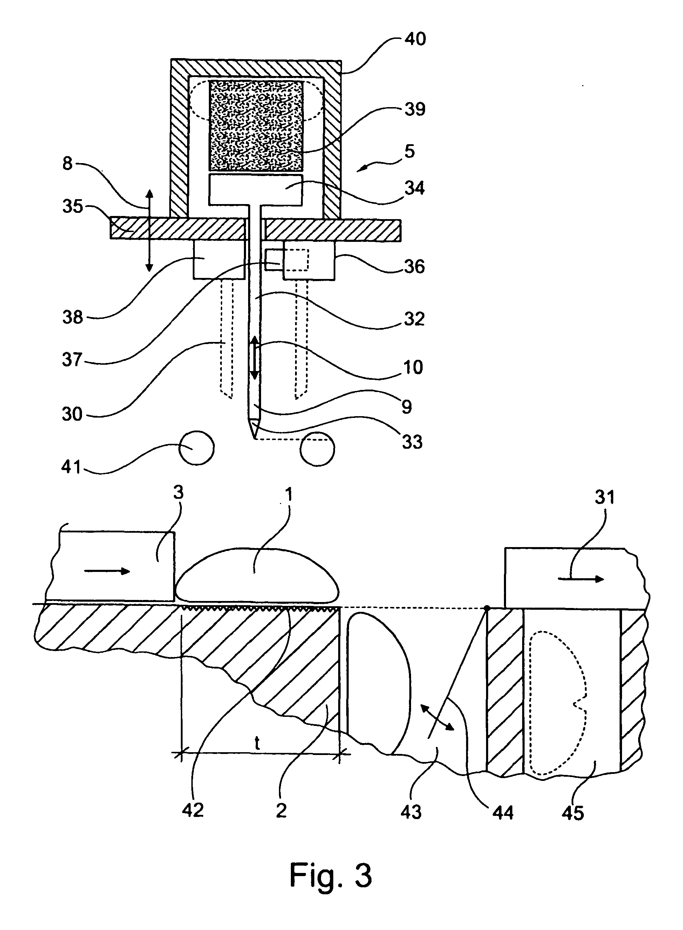

Oberhalb des Schneidtisches 2 befindet sich eine entlang einer Führung 4 verstellbare Schneideinrichtung 5, wobei die Verstellung der Schneideinrichtung 5 beispielsweise über eine mit einem Motor 6 angetriebene Spindel 7 erfolgen kann und durch den Pfeil 8 angedeutet wird. Die Schneideinrichtung 5 weist mehrere in Schnittrichtung hintereinander angeordnete Messersegmente 9 auf, die in einem Messerhalter 35 (Fig. 3) der Schneideinrichtung 5 in Richtung zum Schneidtisch 2 hin verstellbar geführt sind, was später erläutert wird. Diese Verstellbarkeit der Messersegmente 9 im Messerhalter 35 (Fig. 3) ist durch den Pfeil 10 angedeutet. Ein Abstreifer 41 ist auf der der zu schneidenden Frucht 1 zugewandten Seite der Schneideinrichtung 5 angeordnet, um die Frucht 1 beim Hochfahren der Messersegmente 9 zurückzuhalten und das Messersegment 9 aus der Frucht 1 herauszuziehen. Die Transportrichtung für die Früchte 1 geht aus der Zeichenebene heraus, so daß die dargestellte Ansicht quer zur Transportrichtung liegt. Unterhalb des Schneidtisches 2 ist die zurücklaufende Förderleiste 3' der Fördereinrichtung 4 erkennbar, um nach Art eines Förderbandes in die Zeichenebene hinein zu einem Sammelbehälter zu gelangen, was ebenfalls später erläutert wird.

In **Fig. 2A** sind die Messersegmente 9 in ihrer Wirkungsweise im Detail dargestellt. In einer ersten Stellung A weisen die Messersegmente 9 einen Abstand zum Schneidtisch 2 auf, der groß genug ist, damit die Früchte 1 auf den Schneidtisch 2 gelangen können, ohne an den Messersegmenten 9 anzustoßen. Die Stellung B ist eine Endstellung der Messersegmente 9, die maximal erreichbar ist, wenn die Schneideinrichtung 5 (Fig. 1) auf- und abbewegt wird.

Ein Messersegment 9 kann in Schnittrichtung eine Breite von 0,25 mm bis 1,5 mm aufweisen. Bei dieser Breite ist eine Anpassung an die Kontur der Frucht 1 mit ausreichender Genauigkeit möglich, um die gewünschte, voreingestellte Schnittiefe bereitzustellen. Die Schneidkante an der Spitze des Messersegments 9 ist dann Teil einer der Breite entsprechend abgestuften Schnittlinie entlang der Kontur der Früchte 1.

Das Messersegment 9 weist eine Spitze mit einer Schnittkante 33 (Fig. 3) auf, die in Schnittrichtung gesehen eine Schrägstellung um einen Winkel α von ±0,5 bis ±30 Grad aufweist.

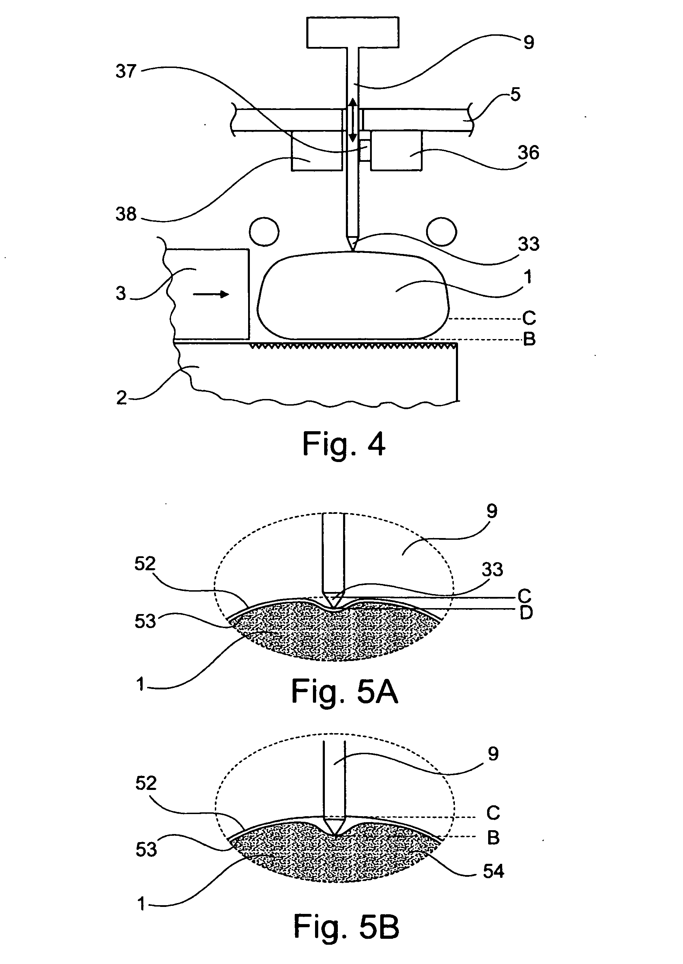

In **Fig. 2B** ist dargestellt, wie sich die einzelnen Messersegmente 9 mit ihrer Spitze an die Früchte 1 anlegen und sich dabei gegeneinander verschieben. Im vorliegenden Fall ist eine Zwischenstellung C zwischen der einen Endstellung A und der anderen Endstellung B dargestellt, bei der die Messersegmente 9 gerade auf der Frucht aufsetzen und die freien Messersegmente 9 neben der Frucht 1 noch nicht die Endstellung B erreicht haben. In dieser Stellung hat noch kein Schlitzen oder Schneiden stattgefunden, zumindest noch kein vollständiges. Dadurch, daß die Messersegmente 9 in dem Messerhalter 35 (Fig. 3) in der Stellung C fixiert werden, erfolgt das Schneiden während des letzten Verstellwegs von der Stellung C in die Endstellung B der Schneideinrichtung 5, hier erkennbar an dem nicht von einer Frucht 1 im Zustellweg gehinderten Messersegment 9. Erst mit dem Aufbringen des letzten Verstellwegs zwischen der Stellung C und der Endstellung B erfolgt also der eigentliche Schneidvorgang der Frucht 1, indem die Messersegmente 9 in die Frucht 1 bzw. die Schale 52 (siehe Fig. 5a, 5b) der Frucht 1 eindringen. Bereits jetzt wird darauf hingewiesen, daß es auch möglich ist, einen Zwischenschritt mit gebremsten statt fixierten Messersegmenten 9 vorzusehen, was später bei der Beschreibung der Fig. 5A deutlich wird.

Aufgrund der gegeneinander verschiebbaren Messersegmente 9 paßt sich die Schnittkante der Kontur der Frucht 1 an, und das Schneiden oder Schlitzen der Frucht 1 kann an die Form der Frucht 1 angepaßt durchgeführt werden.

In **Fig. 3** ist die Vorrichtung in einem Schnitt entlang der Förderrichtung, dargestellt durch den Pfeil 31, gezeigt, wobei die in Richtung des Pfeils 8 höhenverstellbare Schneideinrichtung 5 im Detail dargestellt ist. Zu erkennen ist das Messersegment 9, welches innerhalb der Schneideinrichtung 5 höhenverstellbar geführt ist, dargestellt durch den Pfeil 10. Das Messersegment 9 weist einen Schaft 32, eine Schneide 33 und einen sich gegenüber dem Schaft 32 verbreiternden Kopfbereich 34 auf, der oberhalb eines Messerhalters 35 der Schneideinrichtung 5 angeordnet ist, wohingegen sich der Schaft 32 durch den Messerhalter 35 hindurch erstreckt. Im Bereich des Schafts 32 ist eine Bremseinrichtung 36 vorgesehen, die auf den Schaft 32 einwirkt, wobei diese Bremseinrichtung für jedes Messersegment 9 einzeln oder für alle gemeinsam ausgebildet sein kann. Beispielsweise kann eine am Messerhalter 35 angeordnete Bremsleiste 37 gegen den Schaft 32 gedrückt werden, wobei zweckmäßigerweise eine auf der gegenüberliegenden Seite des Schaftes angeordnete Leiste 38 als Widerlager vorgesehen ist. Beim Anpressen der Bremsleiste 37 an den Schaft 32 des Messersegments 9 kann das Messersegment 9 bei einer mittleren Bremskraft gebremst oder bei Erhöhung der Bremskraft sogar fixiert werden. Der Messerhalter 35 führt den Schaft 32 des Messersegments 9 und begrenzt den Verstellweg des Messersegments 9, indem der Kopf 34 des Messersegments an dem Messerhalter 35 zur Auflage gelangt. Bewerkstelligt wird dies durch ein Federelement 39, das auf die dem Schaft abgewandte Seite des Kopfs 34 einwirkt und das über ein Gehäuseteil 40 an dem Messerhalter 35 abgestützt ist. Auf der der zu schneidenden Frucht 1 zugewandten Seite der Schneideinrichtung 5 ist ein Abstreifer 41 angeordnet, um die Frucht 1 beim Hochfahren des Messersegments 9 zurückzuhalten und das Messersegment 9 aus der Frucht 1 herauszuziehen. Die Schneidvorrichtung 5 ist oberhalb des Schneidtisches 2 angeordnet, auf dem die Frucht 1 aufliegt.

Um einem Verrutschen der Frucht 1 beim Schneidvorgang entgegenzuwirken, kann der Schneidtisch 2 mit einer rutschhemmenden Oberfläche 42 ausgebildet sein, so daß beim Eindringen des Messersegments 9 die lose auf dem Schneidtisch 2 aufliegende Frucht 1 gegen Verrutschen gesichert bzw. daß das Verrutschen der lose aufliegenden Frucht 1 zumindest erschwert ist.

Am Messerhalter 35 können zusätzlich zu den Messersegmenten 9 und zu diesen beabstandet Zusatzmesser 30 vorgesehen sein, die zusätzlich zu den Messersegmenten 9 in die Frucht 1 eindringen. Hierdurch wird zusätzlich zu dem eigentlichen Schlitz oder Schnitt eine Öffnung in der Schale der Frucht erzeugt, die aber im Vergleich zu dem Schnitt oder dem Schlitz klein ist und die nach dem Herausziehen des Zusatzmessers aus der Frucht von dieser selbst zumindest teilweise abgedichtet werden kann, so daß ein Austrocknen verhindert wird.

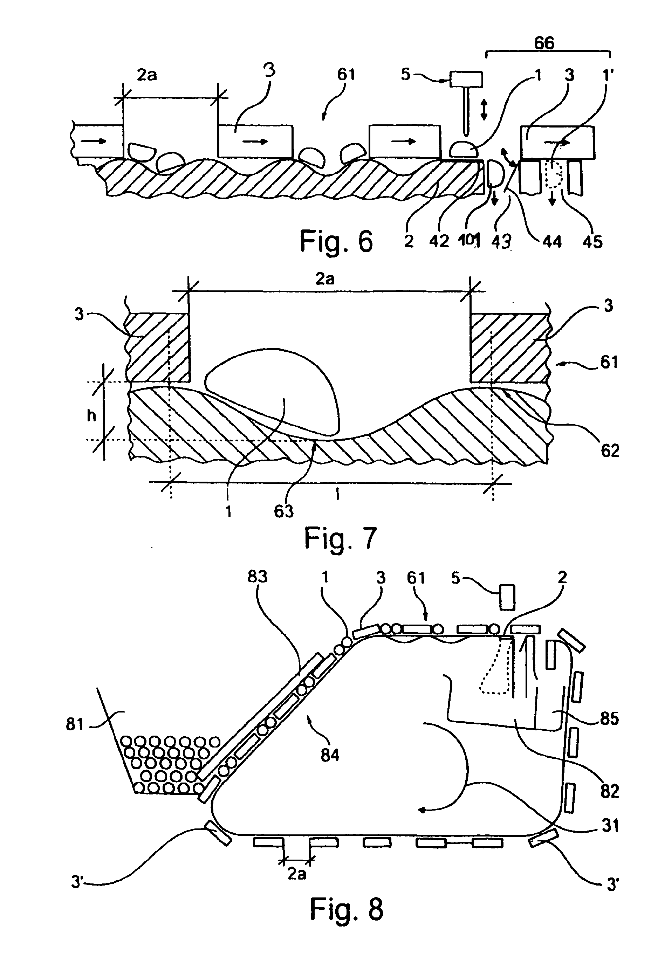

Die von der Fördereinrichtung 3 zur Schneideinrichtung 5 herangeführten Früchte 1 werden durch die Förderung selbst zueinander ausgerichtet, wobei es jedoch sein kann, daß die Früchte 1 in Transportrichtung gesehen nicht nur nebeneinander, sondern teilweise auch voreinander liegen, siehe hierzu Fig. 6. Aus diesem Grund ist, wie wiederum in Fig. 6 dargestellt, der Schneidtisch 2 mit einer Öffnung 43 versehen, in welche die zur Schneidvorrichtung 5 herangeführten Früchte 1, die voreinander liegen, vom Schneidtisch entfernt werden können. Die Öffnung 43 kann mit einer Klappe 44 verschlossen werden, um die geschnittene Frucht 1' in eine der Öffnung 43 in Förderrichtung nachgeschaltete Ausgabeöffnung 45 zu bringen.

In den **Fig. 4, 5A, 5B** wird der Schneid- oder Schlitzvorgang selbst erläutert. Die Schneideinrichtung 5 wird auf die zu schneidende oder zu schlitzende Frucht 1 hin mit frei verschieblichen Messersegmenten 9 zugestellt, so daß beim Auftreffen des Messersegments 9 auf die Frucht 1 das Messersegment 9 innerhalb der Schneidvorrichtung 5 verschoben wird. Das Messersegment 9 sitzt mit seiner Schneidkante 33 auf einer Schale 52 einer auf dem Schneidtisch 2 liegenden Frucht 1 auf, die von der Fördereinrichtung 3 herangeführt wurde, wobei die Frucht 1 unter der Schale 52 noch eine Haut 53 aufweist. Die Schneideinrichtung 5 befindet sich hier in der Stellung C aus Fig. 2B. Messersegmente 9, die auf keine Frucht 1 treffen, befinden sich mit ihrer Spitze also in der Position C vor Erreichen einer Endstellung B.

Bei Erreichen der Stellung C wird die Bremseinrichtung 36 bis 38 (Fig. 4) mit einer mittleren Bremskraft betätigt, wobei jedoch die Bremskraft noch nicht so stark ist, daß sich das auf der Schale 52 aufsitzende Messersegment 9 nicht mehr verschieben kann. Bei weiterer Zustellung der Schneideinrichtung 5 auf die Frucht hin wird daher die Schale 52 der Frucht 1 lediglich eingedrückt, aber nicht geschnitten oder geschlitzt, bis eine Stellung D erreicht wird.

In Fig. 5B ist die Frucht 1 nach dem eigentlichen Schneidvorgang mit teilweise eingedrungenem Messersegment 9 dargestellt, wobei die äußere Schale 52 der Frucht von dem Messersegment 9 durchdrungen wurde, eine innere Haut 53 der Frucht 1 jedoch nicht verletzt wurde.

Bei Früchten wie Eßkastanien oder Maronen, die eine äußere, harte Schale und eine das Fleisch umgebende Haut aufweisen, ist es vorteilhaft, wenn nur die äußere, harte Schale 52 geschnitten wird, die innere Haut 53 jedoch unverletzt bleibt, da hierdurch ein Austrocknen des Fruchtfleischs 54 verhindert werden kann. Erst in Fig. 5B wird also die Endstellung B erreicht.

In Fig. 6 ist dargestellt, wie die Früchte 1 zum Schneidtisch 2 transportiert werden, wobei über eine wellenförmige Ausrichtförderstrecke 61 eine Ausrichtung der Früchte 1 dahingehend erfolgt, daß die weniger gekrümmte Seite, als Unterseite bezeichnet, auf dem Schneidtisch 2 aufliegt und die stärker gekrümmte Seite, als Oberseite bezeichnet, der Schneideinrichtung 5 zugewandt ist. Außerdem wird eine nach dem Schneidtisch 2 vorgesehene Auswurfförderstrecke 66 dargestellt, die eine mit einem Deckel 44 verschließbare Auswurföffnung 43 für nicht geschnittene Früchte 101, 102 und nachfolgend die Auswurföffnung 45 für die geschnittenen Früchte 1' umfaßt.

In Fig. 7 ist die wellenförmige Ausrichtförderstrecke 61 im Detail dargestellt, wobei ausgehend von einer Länge a als durchschnittliche Länge einer Frucht zwischen zwei Förderleisten 3 der Fördereinrichtung ein Abstand von mindestens 1,5 a, vorzugsweise 2,1 a bis 3 a vorhanden ist und die Länge 1 von Berg 62 zu Berg 62 der wellenförmigen Ausrichtförderstrecke 61 größer als der Abstand der Förderleisten 3 zueinander ist. Umgekehrt ausgedrückt bedeutet dies, daß der Abstand zwischen den beiden Förderleisten 3 kleiner ist als der Abstand von einem Wellenberg 62 zum nächsten. Als Höhe h des Wellenbergs 62 gegenüber dem Wellental 63 hat sich eine Höhe h des 0,2- bis 0,7-fachen der durchschnittlichen Länge a der Frucht 1 als geeignet herausgestellt, wobei sicherzustellen ist, daß sich keine Früchte im Wellental 63 sammeln, weil sie von den Förderleisten 3 nicht mehr erfaßt werden.

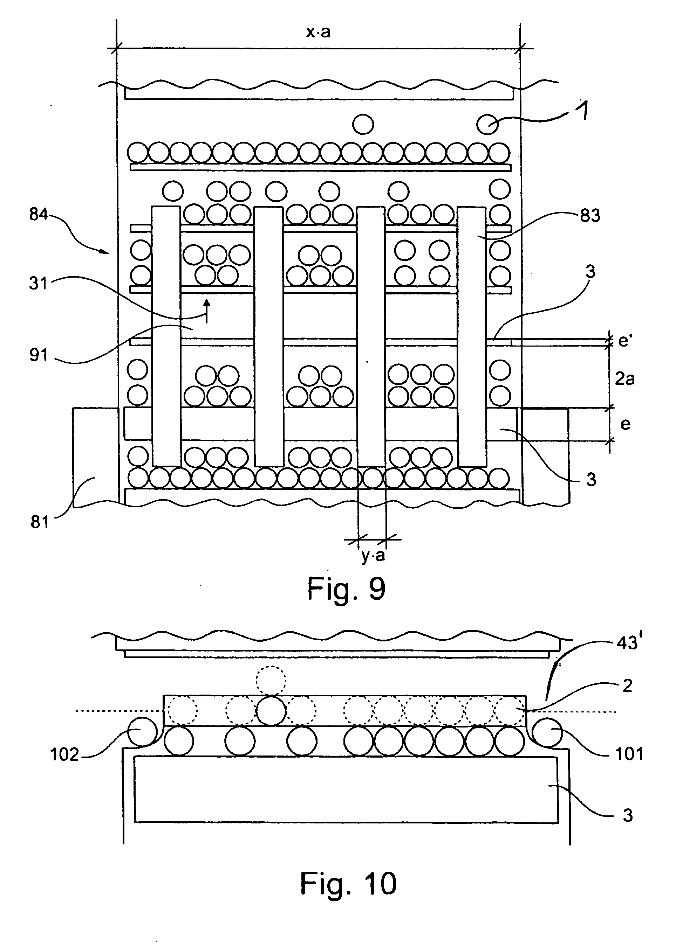

In **Fig. 8** ist die Fördereinrichtung von einem Sammelbehälter 81 ausgehend bis zur Schneideinrichtung 5 sowie der Ausgabebehälter 82 dargestellt. Dabei ist ein Förderband vorgesehen, welches zueinander beabstandete Förderleisten 3 aufweist, in deren Zwischenraum mit Abstand 2a die Früchte 1 aus dem Sammelbehälter 81 hineingelangen. Zur Begrenzung der Anzahl der Früchte zwischen zwei Förderleisten 3 ist eine in Förderrichtung ausgerichtete Leiste 83 als Platzhalter vorgesehen, so daß der Raum unter dieser Längsleiste 83 im wesentlichen frei von Früchten bleibt, dargestellt in Fig. 9. Die Längsleiste 83 hat eine Breite des 0,8- bis 1,8-fachen der durchschnittlichen Länge a, und die Art, wie die Befüllung des Zwischenraums zwischen den Förderleisten 3 erfolgt, ist ebenfalls in Fig. 9 dargestellt.

Vom Sammelbehälter 81 ausgehend werden die Früchte 1 über eine Schrägförderstrecke 84 entgegen der Schwerkraft transportiert und erreichen eine Ausrichtförderstrecke 61 mit wellenförmiger Oberfläche, auf der sich die Früchte 1 während des Transports so ausrichten, daß bei der Mehrzahl der Früchte 1 die glattere, also die weniger gekrümmte Seite, also die Unterseite, auf der Oberfläche aufliegt und die stärker gekrümmte Seite, also die Oberseite, der Schneideinrichtung 5 zugewandt ist. Beim Rösten der Früchte liegen diese in der Regel mit der Unterseite auf dem heißen Rost auf, und ein Schlitz in dieser Seite würde durch die große Hitze das Fruchtfleisch beschädigen.

Vor oder bei dem Erreichen der Schneideinrichtung 5 werden die am Rand befindlichen Früchte 1 aus der Fördereinrichtung herausgeführt, da hier ein sauberer, korrekter Schnitt bzw. eine korrekte Ausrichtung der Frucht 1 nicht mit derselben Zuverlässigkeit sichergestellt werden kann. Die Austragung der Frucht 1 erfolgt seitlich in einen Förderbehälter 82 für ungeschnittene Früchte, dem auch die Früchte 1 zugeführt werden, die den Schneidtisch 2 voreinanderliegend erreichen und nicht von der Schneideinrichtung 5 erfaßt werden würden, wie im Detail in Fig. 6 dargestellt. Die auf dem Schneidtisch 2 befindlichen Früchte 1 werden mittels der Schneidvorrichtung 5 geschnitten, und die geschnittenen Früchte 1' werden über die mit einer Klappe 44 (siehe Fig. 6) verschlossene Ausgabeöffnung 43 (siehe Fig. 6) einer Ausgabeöffnung 45 (siehe Fig. 6) für geschnittene Früchte zugeführt und gelangen in einen Behälter 85 für geschnittene Früchte. Das Transportband wird dann leer zum Sammelbehälter 81 zurückgeführt.

In **Fig. 9** sind die quer zur Förderrichtung ausgerichteten Förderleisten 3 des Förderbandes dargestellt, wobei die Breite e dieser Förderleisten 3 keine wesentliche Rolle spielt, so daß hier zur Veranschaulichung unterschiedlich breite Förderleisten 3 eingezeichnet sind. Die untere Förderleiste 3 hat hier eine größere Breite als die in Förderrichtung davorliegende Leiste 3, die sehr schmal ausgeführt ist, also eine Breite aufweist, die kleiner als die durchschnittliche Länge a ist, wohingegen die breite Förderleiste 3 eine Breite aufweist, die größer als die durchschnittliche Länge a ist.

Aus dem Sammelbehälter 81 heraus werden die zwischen den Leisten 3 gebildeten Zwischenräume 91, auch als Förderkammern bezeichnet, mit Früchten 1 befüllt, wobei die Längsleisten 83 eine Befüllung des darunterliegenden Zwischenraums verhindern, zumindest aber erschweren. Zur Verdeutlichung der Förderkammer 91 ist diese vollständig leer, d. h. ohne Früchte 1 dargestellt, was dann vorkommen kann, wenn im Sammelbehälter 81 keine Früchte 1 mehr sind.

Da die Schrägförderstrecke 84 schräg zur Schwerkraft angeordnet ist, so daß die Früchte 1 schräg nach oben in Richtung des Pfeils 31 transportiert werden, werden Früchte 1, die in Transportrichtung gesehen übereinander angeordnet sind, zum Teil schon während dieses Transports aus der Förderkammer 91 herausfallen. Wird das Ende der Längsleisten 83 erreicht, wird der von den Längsleisten 83 bislang blockierte Raum freigegeben, und die übereinanderliegenden Früchte 1 können sich in diesem Raum verteilen. In der obersten Förderkammer 91 sind nur noch zwei Früchte 1 übereinanderliegend angeordnet, die übrigen Früchte 1 liegen nebeneinander. In dieser Ausrichtung der Früchte 1 nebeneinander werden die Früchte 1 dem Schneidtisch 2 zugeführt, so daß mehrere Früchte 1 gleichzeitig geschnitten werden können.

In **Fig. 10** ist eine Möglichkeit dargestellt, wie Früchte 101, 102, die sich am Rand befinden, schon vor dem Erreichen des Schneidtisches 2 seitlich aus der Schrägförderstrecke 84 herausgeführt werden können. Dazu verjüngt sich die Auflagefläche der Förderbahn vor dem Schneidtisch 2, und die Früchte 101, 102 fallen durch die aufgrund der Verjüngung gebildeten Öffnungen 43' in einen Ausgabesammelbehälter (nicht dargestellt).

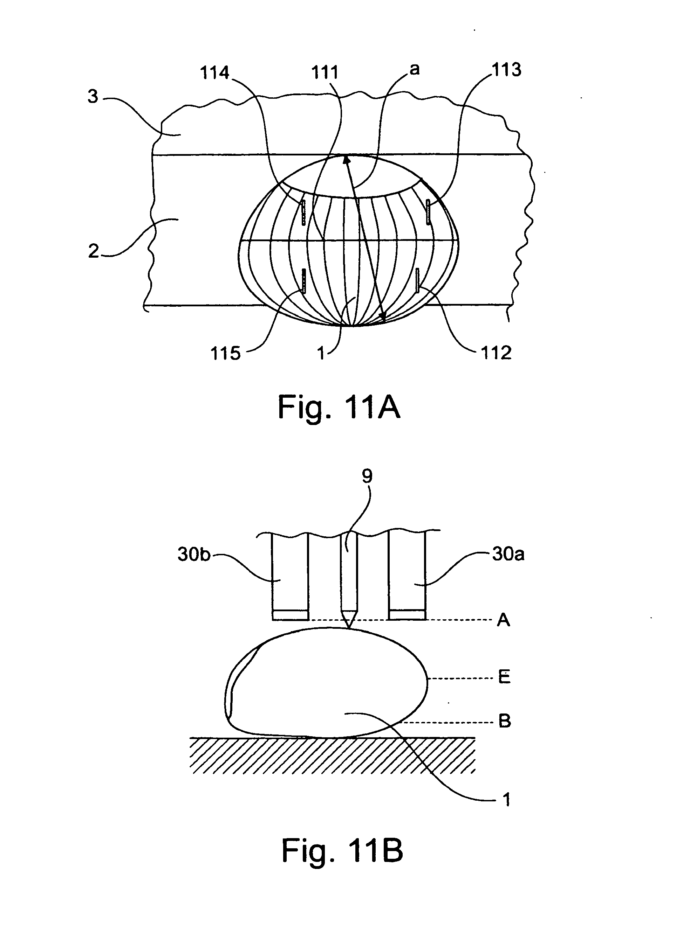

In den **Fig. 11A und B** ist die Verwendung von Zusatzmessern 30a, 30b vor dem Schnitt oder während des Schneidens gezeigt. In **Fig. 11A** ist dargestellt, wie eine Frucht 1, hier eine Eßkastanie, idealerweise geschnitten wird. Die Eßkastanie 1 liegt mit ihrer Unterseite auf dem Schneidtisch 2 auf, auf den sie durch die Förderleiste 3 geschoben wurde. Nach dem Schneiden mit den Messersegmenten 9 ist ein Schlitz 111 quer zur Maserung der Eßkastanie 1 vorhanden, und wiederum quer zu diesem und in einem Abstand sind im Ausführungsbeispiel vier weitere Schlitze 112-115 in die Frucht 1 eingebracht. In Fig. 11A ist auch die durchschnittliche Länge a angegeben, die dem durchschnittlichen Durchmesser entspricht und mit der Korngröße der Sortierung der Früchte 1 zusammenhängt, die beispielsweise in einer Sortierung von 35 bis 45 mm angeboten werden. Der Schlitz 111 ist hier als durchgehende Schnittöffnung dargestellt. Alternativ könnte bei entsprechender Ausgestaltung und Anordnung der Messersegmente 9 anstelle des Schlitzes 111 eine Perforationslinie erzeugt werden. Dies kann beispielsweise durch beabstandete Anordnung der Messersegmente 9 im Messerhalter 35 erreicht werden, oder durch Verwendung von Messersegmenten mit abgeschrägter Schneide 33, wobei bei entsprechender Fixierposition nur die Spitze der Schneide 33 in die Schale hineingetrieben wird. Aber auch andere Ausgestaltungen der Messerschneide 33 sind denkbar, wie eine beidseitige Abschrägung der Schneide 33 mit einer mittigen Spitze.

Wie in **Fig. 11B** dargestellt, ist die Ausrichtung der Zusatzmesser 30a, 30b zum Messersegment 9 so gewählt, daß eine Frucht mindestens einen Schlitz quer zur Schnittrichtung der Messersegmente 9 und beabstandet zu diesen erhält. Diese Zusatzmesser 30a, 30b sind in den Fig. 2A und B nicht dargestellt. Je nach Anordnung der Zusatzmesser 30a, 30b am Messerhalter 35 ist die Eindringtiefe in die Frucht 1 bis zu einer Stellung E vorgegeben, wobei diese Eindringtiefe oberhalb der Endstellung B und selbstverständlich unterhalb der oberen Endstellung A liegen kann.

Anstelle der Zusatzmesser 30a, 30b oder zusätzlich zu den Zusatzmessern 30a, 30b können auch Niederhalter vorgesehen sein. Derartige Niederhalter können federnde Gummipuffer oder federbelastete Fühler sein, die bei der Zustellbewegung des Messehalters 35 auf der Oberseite der Frucht 1 aufliegen und gegebenenfalls gegen eine Federkraft einfedern können, anstatt wie die Zusatzmesser 30a, 30b in die Frucht 1 einzudringen. Es kann auch zweckmäßig sein, die Niederhalter an einem Träger anzuordnen, der gegenüber dem Messerhalter 35 verstellbar ist, um dann, wenn die Niederhalter auf den Früchten 1 aufsitzen, die Zustellbewegung des Trägers der Niederhalter zu stoppen und die Niederhalter in dieser Stellung unabhängig von der Zustellbewegung des Messerhalters 35 zu fixieren. Wesentlich ist, daß dadurch vor dem Aufbringen der Schneidkraft an dem Messerhalter 35 die Frucht 1 stabilisiert werden kann.

Zum Knacken von Nüssen oder Pistazienkernen kann es ausreichend sein, wenn anstelle von Messersegmenten 9 mit einer Schneidkante an der Spitze Stempel mit stumpfer Spitze verwendet werden, da hier ein Zertrümmern der Schale im Vordergrund steht. Durch die große Länge der Krafteinwirkung auf die Schale kann diese einfach geöffnet und das Fruchtfleisch herausgelöst werden, ohne daß es zu einer Beschädigung des Fruchtfleischs durch die Spitze kommt.

### Einrichtung zum Schlitzen oder Schneiden von Früchten mit harter Schale, insbesondere Eßkastanien oder Maronen, und Verfahren hierzu

### Bezugszeichenliste

- 1: Frucht
- 1': geschnittene Frucht
- 2: Schneidtisch
- 3, 3': Förderleisten
- 4: Führung
- 5: Schneideinrichtung
- 6: Motor
- 7: Spindel
- 8: Pfeil (Verstellbarkeit der Schneideinrichtung 5)
- 9: Messersegment
- 10: Pfeil (Verstellbarkeit der Messersegmente 9)
- 30, 30a, 30b: Zusatzmesser
- 31: Pfeil (Förderrichtung)
- 32: Schaft
- 33: Schneide
- 34: Kopfbereich
- 35: Messerhalter
- 36: Bremseinrichtung
- 37: Bremsleiste
- 38: Widerlagerleiste

- 39: Federelement
- 40: Gehäuseteil
- 41: Abstreifer
- 42: rutschhemmende Oberfläche
- 43, 43': Auswurföffnung (für ungeschnittene Früchte)
- 44: Klappe
- 45: Auswurföffnung (für geschnittene Früchte)
- 52: Schale (der Frucht)
- 53: Haut (der Frucht)
- 54: Fruchtfleisch
- 61: Ausrichtförderstrecke
- 62: Wellenberg
- 63: Wellental
- 66: Auswurfförderstecke
- 81: Sammelbehälter
- 82: Ausgabe-/Sammelbehälter (für ungeschnittene Früchte)
- 83: Längsleiste
- 84: Schrägförderstrecke
- 85: Behälter für geschnittene Früchte
- 91: Förderkammer
- 101, 102: ungeschnittene Früchte
- 111: Schlitz (quer zur Maserung der Eßkastanie)
- 112-115: weitere Schlitze (quer zum Schlitz 111)

- A: erste Stellung der Messersegmente
- B: maximale Endstellung der Messersegmente

- C: Zwischenstellung der Messersegmente
- E: Eindringtiefe der Messersegmente (beispielhaft)
- a: durchschnittliche Länge einer Frucht (= durchschnittlicher Durchmesser)
- h: Höhe des Wellenbergs
- e: Breite der Förderleiste

## Patentansprüche

1. Vorrichtung zum Schlitzen oder Schneiden der Schale (52) von hartschaligen Früchten (1), insbesondere Eßkastanien oder Maronen, aufweisend einen Schneidtisch (2) zum Auflegen der Frucht (1) und eine in einem Abstand zum Schneidtisch (2) angeordnete, zum Schneidtisch (2) hin entlang einer Führung (4) verstellbare Schneideinrichtung (5),
**dadurch gekennzeichnet,**
**daß** die Schneideinrichtung (5) mehrere, in Schnittrichtung hintereinander angeordnete Messersegmente (9) umfaßt und daß jedes der Messersegmente (9) gegenüber dem benachbarten Messersegment (9) in einem Messerhalter (35) in Richtung zum Schneidtisch (2) hin verstellbar geführt ist und daß eine Bremseinrichtung (36-38) vorgesehen ist, mit der jedes Messersegment (9) einzeln oder alle Messersegmente (9) zusammen gegenüber dem Messerhalter (35) in lösbarer Weise fixierbar sind.

2. Vorrichtung nach Anspruch 1,
**dadurch gekennzeichnet,**
**daß** die Messersegmente (9) so angeordnet und ausgestaltet sind und so mit der Bremsvorrichtung (36-38) zusammenwirken, daß beim Schneidvorgang eine Perforationslinie in Form einzelner Öffnungen erzeugbar ist.

3. Vorrichtung nach Anspruch 1 oder 2,
**dadurch gekennzeichnet,**
**daß** das Messersegment (9) eine Spitze mit einer Schnittkante (33) aufweist, die in Schnittrichtung gesehen eine Schrägstellung von ±0,5 bis ±30 Grad aufweist.

4. Vorrichtung nach einem der Ansprüche 1 bis 3,
**dadurch gekennzeichnet,**
**daß** die Bremseinrichtung (36-38) eine Bremsstellung aufweist, in der ein Verschieben des Messersegments (9) gegen eine Bremskraft ermöglicht ist, und daß eine Fixierstellung vorgesehen ist, in der die Bremskraft so eingestellt ist, daß das Messersegment (9) beim Schneiden festgehalten wird.

5. Vorrichtung nach einem der Ansprüche 1 bis 4,
**dadurch gekennzeichnet,**
**daß** der Schneidtisch (2) so breit ist, daß mehrere Früchte (1) gleichzeitig nebeneinander auf dem Schneidtisch (2) angeordnet werden können.

6. Vorrichtung nach einem der Ansprüche 1 bis 5,
**dadurch gekennzeichnet,**
**daß** der Schneidtisch (2) und die Schneideinrichtung (5) an einer Fördereinrichtung (3) für die Früchte (1) angeordnet sind, wobei der Schneidtisch (2) und die Schneideinrichtung (5) vorzugsweise quer zur Förderrichtung angeordnet sind.

7. Vorrichtung nach Anspruch 6,
**dadurch gekennzeichnet,**
**daß** die Fördereinrichtung (3, 3') einen Sammelbehälter (81) für die Früchte (1) aufweist, an dem ein Förderband mit in Förderrichtung (31) hintereinanderliegenden Förderkammern (91) angeordnet ist, wobei sich die Förderkammern (91) in Förderrichtung (31) mindestens über die 1,5-fache durchschnittliche Länge (a) der Früchte (1) erstrecken und in der Richtung quer zur Förderrichtung (31) über mindestens die x-fache durchschnittliche Länge (a) der Früchte (1) erstrecken, wobei x mindestens 2 ist.

8. Vorrichtung nach Anspruch 7,
**dadurch gekennzeichnet,**
**daß** zwischen den Förderkammern (91) und dem Behälter (81) zueinander beabstandete Leisten (83) vorgesehen sind, deren Breite quer zur Förderrichtung (31) mindestens die γ-fache durchschnittliche Länge (a) der Früchte beträgt, wobei y mindestens 1 ist.

9. Vorrichtung nach einem der Ansprüche 1 bis 8,
**dadurch gekennzeichnet,**
**daß** nach dem Schneidtisch (2) eine Auswurfförderstrecke (66) vorgesehen ist, wobei die Auswurfförderstrecke (66) nach dem Schneidtisch (2) eine Auswurföffnung (43) für nicht geschnittene Früchte (101, 102) umfaßt.

10. Vorrichtung nach Anspruch 9,
**dadurch gekennzeichnet,**
**daß** sich der Schneidtisch (2) in Förderrichtung (31) über die 0,6-fache bis 1-fache durchschnittliche Länge (a) der Früchte (1) erstreckt und daß sich die sich an den Schneidtisch (2) unmittelbar anschließende Auswurföffnung (43) in Förderrichtung (31) über die 1-fache bis 1,5-fache durchschnittliche Länge (a) der Früchte (1) erstreckt und verschließbar ist.

11. Vorrichtung nach Anspruch 9 oder 10,
**dadurch gekennzeichnet,**
**daß** die Auswurfförderstrecke (66) nach der Auswurföffnung (43) für nicht geschnittene Früchte (101, 102) entweder eine Auswurföffnung (45) für geschnittene Früchte (1') umfaßt, die sich an die Auswurföffnung (43) für nicht geschnittene Früchte (101, 102) in Förderrichtung (31) anschließt und die sich mindestens über die 1-fache durchschnittliche Länge (a) der Früchte (1) erstreckt, oder eine Gehäusekante aufweist, über welche die Früchte (1') geführt werden und dabei nach unten wegkippen.

12. Vorrichtung nach einem der Ansprüche 1 bis 11,
**dadurch gekennzeichnet,**
**daß** vor dem Schneidtisch (2) eine Ausrichtförderstrecke (61) vorgesehen ist und daß die Ausrichtförderstrecke (61) einen in Förderrichtung (31) welligen Bereich mit sich abwechselnden Wellentälern (63) und Wellenbergen (62) aufweist.

13. Vorrichtung nach Anspruch 12,
**dadurch gekennzeichnet,**
**daß** die Länge (1) zwischen den Wellentälern (63) und den Wellenbergen (62) mindestens der 2-fachen durchschnittlichen Länge (a) der Früchte (1) entspricht und dass die Höhe h zwischen Wellenberg (62) und Wellental (63) dem 0,1-fachen bis 0,6-fachen der durchschnittlichen Länge (a) der Früchte (1) entspricht.

14. Vorrichtung nach einem der Ansprüche 1 bis 13,
**dadurch gekennzeichnet,**
**daß** zusätzlich zu den Messersegmenten (9) zu diesen beabstandete Niederhalter vorgesehen sind, die während der Zustellbewegung auf der Frucht (1) anliegen.

15. Vorrichtung nach einem der Ansprüche 1 bis 14,
**dadurch gekennzeichnet,**
**daß** zwischen dem Schneidtisch (2) und der Schneideinrichtung (5) ein Abstreifer (41) für die geschnittene Frucht (1) angeordnet ist.

16. Verfahren zum Schlitzen oder Schneiden der Schale (52) von hartschaligen Früchten (1), insbesondere Eßkastanien oder Maronen, mit einer auf die Früchte (1) zustellbaren Schneidvorrichtung (5),
**dadurch gekennzeichnet,**
**daß** die Schneidvorrichtung (5) gegeneinander verstellbare Messersegmente (9) aufweist,
- die in einem ersten Schritt beim Zustellen der Schneidvorrichtung (5) unter gegenseitigem Verschieben in Zustellrichtung an die Frucht (1) angelegt werden und die Kontur der Frucht (1) nachbilden,
- die in einem nachfolgenden Schritt mittels einer Bremseinrichtung (36-38) mit hoher Bremskraft in dieser Kontur fixiert werden und mit weiterem Zustellen in Zustellrichtung in die Schale (52) der Frucht (1) eindringen.

17. Verfahren nach Anspruch 16,
**dadurch gekennzeichnet,**
**daß** vor dem Fixieren ein Bremsen des Messersegments (9) erfolgt, bei dem eine Verschiebung des Messersegments (9) gegen eine mittlere Bremskraft beim Anlegen an der Oberfläche der Frucht (1) und bei weiterem Zustellen ohne Schneiden der Oberfläche der Frucht (1) möglich ist.

18. Verfahren nach einem der Ansprüche 16 bis 17,
**dadurch gekennzeichnet,**
**daß** zusätzlich zu den Messersegmenten (9) mindestens ein zu diesen beabstandeter Niederhalter vorgesehen ist, der während der Zustellbewegung der Messersegmente (9) auf der Frucht (1) zur Anlage gebracht wird, bevor die Messersegmente (9) in die Frucht (1) eindringen.

## Claims

1. A device for slitting or cutting the shell (52) of hard-shelled fruits (1), more particularly sweet chestnuts or marrons, comprising a cutting table (2) for positioning the fruit (1) and a cutting unit (5) disposed at a distance from said cutting table (2) and displaceable along a guiding means (4) toward said cutting table (2),
**characterized in that**
said cutting unit (5) comprises a plurality of knife segments (9) disposed one behind the other in the cutting direction and that each of said knife segments (9) is displaceably guided in the direction toward said cutting table (2) relatively to the adjacent knife segment (9) in a knife holder (35) and that a braking means (36 - 38) is provided, by means of which each knife segment (9) individually, or all knife segments (9) together, can be releasably fixed in position in relation to said knife holder (35).

2. The device as defined in claim 1,
**characterized in that**
said knife segments (9) are disposed and designed to cooperate with said braking means (36 - 38) such that during the cutting operation a line of perforations in the form of individual holes can be produced.

3. The device as defined in claim 1 or claim 2,
**characterized in that**
said knife segment (9) has a tip with a cutting edge (33), which, as regarded in the cutting direction, is inclined at an angle of from 0.5 to ± 30 degrees.

4. The device as defined in any one of claims 1 to 3,
**characterized in that**
said braking means (36 - 38) has a braking position which allows said knife segment (9) to be displaced against a braking force, and that a holding position is provided, in which said braking force is adjusted such that said knife segment (9) is fixed in position during the cutting operation.

5. The device as defined in any one of claims 1 to 4,
**characterized in that**
the width of said cutting table (2) is sufficient to allow concurrent accommodation of a plurality of juxtaposed fruits (1) on said cutting table (2).

6. The device as defined in any one of claims 1 to 5,
**characterized in that**
said cutting table (2) and said cutting unit (5) are positioned at a conveyor (3) for the fruits (1), and said cutting table (2) and said cutting unit (5) are preferably disposed transversely to the direction of transport.

7. The device as defined in claim 6,
**characterized in that**
said conveyor (3, 3') comprises a receptacle (81) for the fruits (1), against which a conveyor belt is disposed, which has feed chambers (91) disposed one behind the other in the direction of transport (31), which feed chambers (91) extend in the direction of transport (31) over at least 1.5 times the average length (a) of the fruits (1) and in the direction at right angles to the direction of transport (31) over at least x times the average length (a) of the fruits (1), wherein x is equal to at least 2.

8. The device as defined in claim 7,
**characterized in that**
between said feed chambers (91) and said receptacle (81) there are provided spatially separated strips (83), whose width in the direction at right angles to the direction of transport (31) is at least y times the average length (a) of the fruits, wherein y is equal to at least 1.

9. The device as defined in any one of claims 1 to 8,
**characterized in that**
there is provided an ejection conveyor (66) downstream of said cutting table (2), which ejection conveyor (66) comprises an ejection hole (43) for uncut fruit (101, 102) downstream of said cutting table (2).

10. The device as defined in claim 9,
**characterized in that**
said cutting table (2) extends in the direction of transport (31) over from 0.60 to 1.00 times the average length (a) of the fruits (1) and that said ejection hole (43) directly adjoining said cutting table (2) extends in the direction of transport (31) over from 1.00 to 1.50 times the average length (a) of the fruits (1) and is closeable.

11. The device as defined in claim 9 or claim 10,
**characterized in that**
said ejection conveyor (66) comprises, downstream of said ejection hole (43) for uncut fruit (101, 102), either an ejection hole (45) for cut fruit (1'), which adjoins said ejection hole (43) for uncut fruit (101, 102) in the direction of transport (31) and extends over at least 1.00 times the average length (a) of the fruits (1), or an edge of the housing, over which the fruits (1') are guided and tipped off.

12. The device as defined in any one of claims 1 to 11,
**characterized in that**
there is provided, upstream of said cutting table (2), an aligning conveyor (61), and that said aligning conveyor (61) has a region that undulates in the direction of transport (31) and displays alternating wave troughs (63) and wave crests (62).

13. The device as defined in claim 12,
**characterized in that**
the length (1) between said wave troughs (63) and said wave crest (62) is equal to at least 2.00 times the average length (a) of the fruits (1) and that the height h between wave crest (62) and wave trough (63) is equal to from 0.10 to 0.60 times the average length (a) of the fruits (1).

14. The device as defined in any one of claims 1 to 13,
**characterized in that**
in addition to said knife segments (9) there are provided, in space relationship thereto, depressors that are adapted to bear on the fruit (1) during the delivery motion thereof.

15. The device as defined in any one of claims 1 to 14,
**characterized in that**
between said cutting table (2) and said cutting unit (5) there is provided a retainer (41) for the cut fruit (1).

16. A method for slitting or cutting the shell (52) of hard-shelled fruits (1), more particularly sweet chestnuts or marrons, by means of a cutting device (5) capable of being advanced toward the fruits (1),
**characterized in that**
said cutting device (5) comprises mutually displaceable knife segments (9),
- which, in a first step of the advancing operation of said cutting device (5), are caused, with displacement thereof in the direction of advance relatively to each other, to bear on the fruit (1) so as to follow the contour of the fruit (1), and
- which, in a subsequent step, are fixed in position in this contour by a braking means (36 - 38) displaying a high braking force and are thus caused to penetrate the shell (52) of the fruit (1) as the advancing motion continues.

17. The method as defined in claim 16,
**characterized in that**
before said knife segments (9) are fixed in position, they are subjected to a braking force which allows for displacement thereof against a braking force of moderate strength on reaching the surface of the fruit (1) and on continuation of the advancing motion without cutting the surface of the fruit (1).

18. The method as defined in claim 16 or claim 17,
**characterized in that**
in addition to said knife segments (9), there is provided at least one depressor which is in spaced relationship to said knife segments (9) and which during the advancing motion of the latter comes to bear against the fruit (1) prior to penetration of the fruit (1) by said knife segments (9).

## Revendications

1. Dispositif pour fendre ou couper la coque (52) de fruits (1) ayant une coque dure, en particulier des châtaignes ou des marrons présentant une table de coupe (2) pour appliquer le fruit (1) et un dispositif de coupe (5) disposé à distance de la table de coupe (2), réglable le long d'un guide (4) en direction de la table de coupe (2),
**caractérisé en ce que**
le dispositif de coupe (5) comprend plusieurs segments de lames (9) disposés les uns derrière les autres dans la direction de coupe et **en ce que** chaque segment de lame (9) est guidé de manière ajustable dans un porte-lames (35) en direction de la table de coupe (2) par rapport au segment de lame voisin (9), et **en ce qu'**il est prévu un dispositif de freinage (36-38) avec lequel chaque segment (9) individuellement ou tous les segments de lame (9) ensemble peuvent être fixés de manière solidaire par rapport au porte-lames (35).

2. Dispositif selon la revendication 1, **caractérisé en ce que** les segments de lame (9) sont disposés et structurés de façon à coopérer avec le dispositif de freinage (36-38) de sorte que pendant l'opération de coupe, une ligne de perforation peut être réalisée sous forme d'ouvertures séparées.

3. Dispositif selon la revendication 1 ou 2, **caractérisé en ce que** le segment de lame (9) présente une pointe avec une arête de coupe (33) qui présente, vue dans la direction de coupe une position inclinée de ± 0,5 à ±30 degrés.

4. Dispositif selon l'une des revendications 1 à 3, **caractérisé en ce que** le dispositif de freinage (36-38) présente une position de freinage dans laquelle un déplacement du segment de lame (9) est possible à l'encontre d'une force de freinage et **en ce que** la force de freinage est réglée de sorte que le segment de lame (9) est maintenu lors de la coupe.

5. Dispositif selon l'une des revendications 1 à 4, **caractérisé en ce que** la table de coupe (2) est de largeur suffisante pour que plusieurs fruits (1) puissent être disposés simultanément les uns à côté des autres sur la table de coupe (2).

6. Dispositif selon l'une des revendications 1 à 5, **caractérisé en ce que** la table de coupe (2) et le dispositif de coupe (5) sont disposés sur un dispositif de transport (3) pour les fruits (1), la table de coupe (2) et le dispositif de coupe (5) étant disposés de préférence transversalement à la direction de transport.

7. Dispositif selon la revendication 6, **caractérisé en ce que** le dispositif de transport (3, 3') présente un récipient de collecte (81) pour les fruits (1), récipient sur lequel est disposé un tapis de transport avec des cavités de transport (91) placées les unes derrière les autres dans la direction de transport (31), les cavités de transport (91) s'étendant dans le sens de transport (31) au moins sur une fois et demi de la longueur moyenne (a) des fruits (1) et s'étendant au moins dans la direction transversalement au sens de transport (31) sur au moins la longueur multiple moyenne (a) du fruit (1), x étant égal au moins à 2.

8. Dispositif selon la revendication 7, **caractérisé en ce qu'**entre les cavités de transport (91) et le récipient (81), il est prévu des baguettes distancées (83) dont la largeur est s'élève transversalement au sens de transport (31) à au moins la longueur moyenne γ-multiple (a) es fruits, y étant au moins égal à 1.

9. Dispositif selon l'une des revendications 1 à 8, **caractérisé en ce qu'**en aval de la table de coupe (2), il est prévu une voie de transport d'éjection (66), la voie de transport d'éjection (66) comprenant en aval de la table de coupe (2) une ouverture d'éjection (43) pour les fruits non coupés (101, 102).

10. Dispositif selon la revendication 9, **caractérisé en ce que** la table de coupe (2) s'étend dans le sens de transport (31) sur 0,6 à 1 fois la longueur moyenne (a) des fruits (1) et **en ce que** l'ouverture d'éjection (43) placée directement dans la continuité de la table de coupe (2) s'étend dans le sens de transport (31) sur 1 fois à 1,5 fois la longueur moyenne (a) des fruits (1) et peut être fermée.

11. Dispositif selon la revendication 9 ou 10, **caractérisé en ce que** la voie de transport d'éjection (66) comprend après l'ouverture d'éjection (43) pour les fruits non coupés (101, 102) soit une ouverture d'éjection (45) pour les fruits coupés (1') qui est dans la continuité de l'ouverture d'éjection (43) dans le sens de transport (31) pour les fruits non coupés (101, 102) et s'étend sur au moins 1 fois la distance moyenne (a) des fruits (1), soit présente un bord de boitier par lequel sont guidés les fruits (1') qui sont basculés vers le bas.

12. Dispositif selon l'une des revendications 1 à 11, **caractérisé en ce qu'**en amont de la table de coupe (2), il est prévu une voie de transport d'ajustement (61) et **en ce que** la voie de transport d'ajustement (61) présente une zone ondulée dans le sens de transport (31) avec des sommets (63) et des creux (62) d'ondulation alternés.

13. Dispositif selon la revendication 12, **caractérisé en ce que** la longueur (1) entre les creux (63) et les sommets (62) d'ondulations correspond à au moins 2 fois la longueur moyenne (a) des fruits (1) et **en ce que** la hauteur h entre le sommet (62) et le creux (63) de l'ondulation correspond à 0,1 à 0,6 fois la longueur moyenne (a) des fruits (1).

14. Dispositif selon l'une des revendications 1 à 13, **caractérisé en ce qu'**il est prévu en supplément des segments de lames (9) des serre-flans à distance qui s'appliquent sur le fruit (1) pendant le mouvement de réglage.

15. Dispositif selon l'une des revendications 1 à 14, **caractérisé en ce qu'**entre la table de coupe (2) et le dispositif de coupe (5), il est disposé une racle (41) pour le fruit coupé (1).

16. Procédé pour entailler ou couper la coque (52) de fruits (1) à coque dure , en particulier de châtaignes ou de marrons avec un dispositif de coupe (5) réglable sur les fruits (1), **caractérisé en ce que**
- le dispositif de coupe (5) présente des segments de lame (9) réglables entre eux,
- qui sont appliqués dans une première étape lors du réglage du dispositif de coupe (5) par déplacement mutuel dans la direction de réglage contre le fruit (1) et reproduisent le contour du fruit (1),
- qui dans une étape suivante sont fixés au moyen d'un dispositif de freinage (36-38) avec une force élevée de freinage dans ce contour et pénètrent avec un réglage supplémentaire dans la direction de réglage dans la coque (52) du fruit (1).

17. Procédé selon la revendication 16, **caractérisé en ce qu'**avant la fixation, il s'effectue un freinage du segment de lame (9), ou un déplacement du segment de lame (9) à l'encontre d'une force de freinage moyenne est possible lors de l'application contre la surfac3e du fruit (1) et en poursuivant le réglage sans coupe de la surface du fruit (1).

18. Procédé selon l'une des revendications 16 à 17, **caractérisé en ce qu'**en supplément des segments de lame (9), il est prévu au moins un serre-flan distancé qui est appliqué pendant le mouvement de réglage des segments de lame (9) contre le fruit (1) avant que les segments de lame (9) ne pénètrent dans le fruit (1).
